# EUROPEAN PATENT SPECIFICATION

(11) **EP 1 494 796 B1**
(45) Date of publication and mention of the grant of the patent: **04.06.2014**
(21) Application number: 03746498.9
(22) Date of filing: 06.03.2003
(51) Int. Cl.: B01J 2/04

(54) **PROCESS FOR SMALL PARTICLE FORMATION**
VERFAHREN ZUR HERSTELLUNG VON KLEINEN TEILCHEN
PROCEDE DE FORMATION DE PETITES PARTICULES

(30) Priority: 12.04.2002 EP 02076436
(43) Date of publication of application: 12.01.2005
(73) Proprietor: Feyecon B.V., 2012 LG Haarlem (NL)
(72) Inventor: PELLIKAAN, Hubert, Clemens, 3572 CA Utrecht (NL); WUBBOLTS, Frank, Emile, NL-3522 AJ Utrecht (NL)
(74) Representative: Nederlandsch Octrooibureau
(86) International application number: PCT/NL2003/000168
(87) International publication number: WO 2003/086606

(56) References cited:
- WO-A-00/37169
- WO-A-00/67892
- WO-A-98/36825

## Description

### TECHNICAL FIELD OF THE INVENTION

The present invention is concerned with a process for the preparation of small particles through precipitation, which process employs a fluid solution comprising a solvent and solute to be precipitated and a non-gaseous antisolvent, said solvent being soluble in or miscible with the antisolvent and said solute being substantially insoluble in the antisolvent, wherein the process comprises the successive steps of combining a stream of the fluid solution with a stream of the antisolvent to achieve a condition of super saturation that triggers the nucleation of the solute; allowing the nuclei formed to grow to particles; collecting the particles and separating them from the antisolvent.

### BACKGROUND OF THE INVENTION

Precipitation processes as described above are known in the art and are typically used to produce to produce nano- and microparticles, i.e. particles with average diameters that are typically in the range of 100 nm to 80 µm.

WO 97/31691 describes a process for the precipitation of small particles as described above, wherein the step of combining the fluid solution with the antisolvent comprises the step of passing the fluid solution through a first outlet into a precipitation zone containing the antisolvent; and passing an energizing gas stream through a second outlet proximal to the first outlet, to generate high frequency sonic waves that break up the fluid solution into small droplets.

WO 98/36825 is concerned with a method of forming particles of a substance, the method comprising: (a) introducing into a particle formation chamber a first supercritical fluid and a solution or suspension of the substance in a vehicle; (b) simultaneously introducing, into the particle formation chamber, an impinging flow of a second supercritical fluid, at an angle to, and directed at, the direction of flow of the first supercritical fluid, the first and second supercritical fluids entering the particle formation chamber separately; and (c) using either or both of the first and second supercritical fluids to disperse the solution or suspension, and to extract the vehicle from it, substantially simultaneously and substantially immediately on introduction of the fluids into the particle formation chamber.

WO 99/59710 relates to a method for forming particles, said method involving (a) preparing a solution of the target substance in a vehicle which is or includes either a nearcritical fluid or a first supercritical fluid; (b) introducing the solution into a particle formation vessel; and (c) contacting the solution, in the particle formation vessel, with a second supercritical fluid, under conditions which allow the second supercritical fluid to cause precipitation of particles of the target substance, wherein the second supercritical fluid is miscible with the vehicle and is a fluid in which the target substance is insoluble.

WO 00/37169 describes a process for the production of particles of a material whereina stream of a dispersion of the material in a solvent and a stream of a compressible fluid antisolvent substance are brought into contact with each other so that the streams combine to form a mixture under conditions such that the substance is in compressible fluid antisolvent state, the mixture is then caused to flow along a conduit extending downstream from the region where the streams come into contact, toward an orifice opening from the conduit, the pressure and temperature of the mixture in the conduit being such that the compressible fluid antisolvent substance remains in a compressed state over at least part of the length of the conduit, then the mixture is caused to flow into a downstream region in which the compressible fluid antisolvent substance decompresses into a gaseous state and the material is isolated in a particulate state.

WO 00/67892 is concerned with a method for forming particles of a substance, comprising the step of introducing into a mixing chamber a fluid gas and at least one vehicle system comprising at least one substance in solution or suspension such that droplet formation and extraction of the vehicle occur substantially simultaneously by the action of the fluid gas; wherein turbulence is induced in at least one of said fluid gas and said vehicle system so as to create a controlled disorder in the flow of the at least one of the fluid gas or the vehicle system in order to control the particle formation in said mixing chamber, said controlled disorder being created by at least one flow perturbation means.

### SUMMARY OF THE INVENTION

The aforementioned methods of forming small particles suffer from the drawback that nucleation and subsequent particle growth proceed in a largely uncontrolled fashion. Thus, particles are obtained that display a wide variation in diameter and structure. Also, with these existing methods, it is very difficult to obtain very small (nano-)particles in appreciable yields. Yet another drawback of these methods relates to the agglomeration of particles which is frequently observed during the manufacturing process.

The inventors have found that the above disadvantages of the existing methods may be negated effectively by decoupling the operation of mixing the fluid solution with the antisolvent from the nucleation and particle growth operations. In the methods known from the prior art, the mixing of the fluid solution with the antisolvent and the ensuing nucleation and particle growth occur simultaneously. As a result, the level of supersaturation is not constant, and due to the continued addition of fluid solution in combination with the inevitable turbulence within such a vessel, particles in various sizes can be found therein at any moment in time.

By first feeding a stream of the fluid solution and a stream of the antisolvent into a mixing zone where both streams are thoroughly mixed to achieve a condition of super saturation whilst ensuring that substantially no nucleation occurs during the mixing and subsequently feeding the resulting mixture into a nucleation zone so as to allow nucleation to commence and particles to grow, it was found to be possible to control the particle formation very effectively, meaning that particles can be obtained with little variation in diameter and without significant agglomeration. Also the method makes it possible to obtain extremely small particles in high yields without significant contamination with larger particles.

Furthermore the present method enables the control of particle size by varying the degree of supersaturation. The degree of supersaturation can be manipulated by changing the percentages of solvent, antisolvent and solute that are admixed in the mixing zone. Another possibility to influence particle size in the present method is to manipulate the nucleation and growth time by varying flow rates and/or by changing the volume of the mixing zone and nucleation zone.

In the present method, the degree of supersaturation in the mixing zone is advantageously maintained at a relatively low level so as to prevent premature nucleation. The level of supersaturation can suitably be raised subsequently in the nucleation zone by adding additional antisolvent. Thus, the speed of nucleation may be increased without significantly affecting particle size distribution.

### DETAILED DESCRIPTION OF THE INVENTION

Consequently, one embodiment of the present invention relates to a process for the preparation of small particles through precipitation, which process employs a fluid solution comprising a solvent and solute to be precipitated and a supercritical or nearcritical antisolvent, said solvent being soluble in or miscible with the antisolvent and said solute being substantially insoluble in the antisolvent, wherein the process comprises the successive steps of:
a. feeding a stream of the fluid solution and a stream of the antisolvent into a mixing zone where both streams are thoroughly mixed to achieve a condition of super saturation;
b. feeding the resulting mixture of the fluid solution and the antisolvent into a nucleation zone allowing nucleation to commence;
c. allowing the nuclei formed in the nucleation zone to grow to particles with a volume weighted average diameter of no more than 50 µm, preferably of no more than 7 µm.
d. collecting the particles e. separating them from the supercritical or nearcritical antisolvent by deppressuring;
   and wherein during or following step b., and prior to step d. additional antisolvent is admixed to the mixture of the fluid solution and the antisolvent;

Another embodiment of the invention relates to a process for the preparation of small particles through precipitation, which process employs a fluid solution comprising a solvent and solute to be precipitated and a non-gaseous antisolvent, said solvent being soluble in or miscible with the antisolvent and said solute being substantially insoluble in the antisolvent, wherein the process comprises the successive steps of:
a. feeding a stream of the fluid solution and a stream of the antisolvent into a mixing zone where both streams are thoroughly mixed to achieve a condition of super saturation;
b. feeding the resulting mixture of the fluid solution and the antisolvent into a nucleation zone allowing nucleation to commence;
c. allowing the nuclei formed in the nucleation zone to grow to particles with a volume weighted average diameter of no more than 50 µm, preferably of no more than 7 µm;
d. collecting the particles;
e. separating them from the antisolvent by depressurising;
wherein during or following step b., and prior to step d. additional antisolvent is admixed to the mixture of the fluid solution and the antisolvent, and wherein the residence time within the nucleation and growth zone is at least 3 seconds.

The non-gaseous antisolvent employed in the present process may consist of a single substance or alternatively of a mixture of substances. The antisolvent may be in a supercritical, near critical or subcritical state. Similarly the solvent may also be in a supercritical, near critical or subcritical state. Any combinations of solvent and antisolvent may suitably be employed in the present method, provided the solvent is soluble in or miscible with the antisolvent and the solute is substantially insoluble in the antisolvent. Particularly good results are obtained if the solvent is soluble in the antisolvent. Here the term "soluble" means that under the conditions employed in the mixing zone, eventually at least 5 wt% of the solvent would dissolve into the antisolvent.

The process of the invention can be suitably used in a variety of technical fields such as those related to pharmaceuticals, foods, chemicals, polymers, pesticides, explosives, coatings and catalysts wherein benefits are derived from small particle sizes and concomitant high particle surface areas. The process of the invention involves precipitation of extremely small particles which can consist of a single substance, or alternatively may comprise a combination of components that are substantially insoluble in the antisolvent. Such a combination of components may suitably comprise a carrier material and a functional ingredient that needs to be encapsulated within said carrier material, e.g. to preserve it or to facilitate accurate dosing of said material.

It is an important object of the present invention to provide a process which yields particles that have a highly uniform particle size. This objective may be realised effectively by maintaining conditions within the nucleation zone that ensure that substantially no back mixing occurs. Preferably such conditions are maintained throughout steps b. and c. so that both nucleation and particle growth may proceed unperturbed. In the methods known from the prior art the nucleating particles are subjected to substantial turbulence which makes it impossible to effectively control the nucleation and particle growth process. Also such turbulence has been found to induce agglomeration of particles which further increases the non-uniformity of the particles obtained.

The prime aim of the mixing zone in the present process is to obtain a highly homogeneous mixture of the fluid solution and the antisolvent and to achieve the condition of supersaturation that will act as the driving force for the subsequent nucleation and particle growth. It is highly advantageous to apply extremely high shear forces to ensure that a homogeneous mixture is obtained within a very short time interval and also to achieve a relatively low level of supersaturation. Thus it can be ensured that substantially no nucleation occurs in the mixing zone. Indeed, in a particularly preferred embodiment of the invention less than 25%, more preferably less than 10% of the nuclei formed in the process are formed in the mixing zone.

In step a. of the present process the fluid solution and the antisolvent can be mixed in a weight ratio of between 0.1:99.9 and 90:10. This ratio may vary widely because the proper weight ratio is very much dependent on the nature of the solvent, antisolvent and solute used.

The present process is advantageously operated as a continuous or semi-continuous process. In case of a semi-continous process, steps a. , b. & c. may be operated in an essentially continuous fashion, whereas step d. is carried out batch-wise. It is preferred to mix the stream of fluid solution and antisolvent in an essentially constant ratio throughout the process in order to obtain a reproducible product quality.

In the present method, the residence time within the mixing zone is preferably less than 15 seconds, more preferably less than 5 seconds and most preferably less than 1 second. In order to achieve a highly homogeneous mixture within such a short time interval, it is essential to apply a high amount of mixing energy. Preferably, the mixing energy applied in the mixing zone exceeds 1 J/kg, more preferably it exceeds 10 J/kg and most preferable it is more than 50J/kg.

Depending on the desired particle size and the level of supersaturation employed the residence time in the nucleation and growth zone may vary considerably. Generally, the combined residence time within the nucleation and growth zone is at least 3 seconds. Preferably the residence time is at least 20 seconds and more preferably at least 60 seconds. Usually the residence time within the nucleation and growth zone will not exceed 1 hour.

As mentioned herein before, it is preferred to achieve a relatively low level of supersaturation in the mixing zone so as to avoid premature and very rapidly progressing nucleation. However, in order to ensure at the same time that the nucleation process will yield a relatively high yield of particles, additional antisolvent is admixed during or following step b., and prior to step d. to the mixture of the fluid solution and the antisolvent. Thus the level of supersaturation is increased again and further particle growth is stimulated, preferably in such a way that no new nucleation occurs.

In order to achieve uniform particle growth without significant occurrence of additional nucleation, the extra antisolvent is admixed after the precipitated particles have grown to a volume weighted average diameter of at least 0.1 µm, preferably of at least of at least 0.4 µm. In the case of a supercritical or nearcritical antisolvent, uniform particle growth with no additional nucleation can generally be achieved if the antisolvent is admixed at least 1 second after completion of step a., preferably at least 3 seconds after completion of step a.

A low level of supersaturation in the mixing zone is suitably achieved by mixing the solution and antisolvent at flow rates that are lower than those disclosed in the relevant prior art. Typically, the ratio of the solution flow rate to antisolvent flow rate employed in step a. is between 5:1 and 1:10, preferably it is between 4:1 and 1:8. Most preferably said ratio is between 3:1 and 1:6.

The level of supersaturation employed in the mixing zone is usually insufficient to remove all of the solvent from the precipitated particles before they reach the end of the nucleation zone, or alternatively, before the admixture of extra antisolvent. Preferably, the collected particles, when reaching the end of the nucleation zone or immediately prior to the admixture of additional antisolvent, contain at least 1 wt.% solvent, preferably at least 10 wt.% solvent.

The admixture of additional solvent, besides speeding up the particle growth process, additionally offers the advantage that it can be used to remove virtually all of the solvent contained in the precipitated particles. Removal of the entrapped solvent makes it easier to recover the particles, but is also highly desirable from an environmental and health safety perspective. Thus, in a particularly preferred embodiment, the additional antisolvent is admixed in an amount effective to reduce the solvent content of the collected particles to less than 1 wt.%, more preferably to less than 0.1 wt.% and most preferably to less than 0.01 wt.%.

It is feasible to operate the present process with a fluid solution containing widely varying levels of solute as the rate of precipitation is very much dependent on the nature of the antisolvent employed. Generally, the solution comprises between 0.0001 and 30 wt.% solute. Preferably the solution comprises between 0.01 and 10 wt.%, more preferably between 0.1 and 5 wt.% of the solute.

In a preferred embodiment of the invention, the process employs an antisolvent that is selected from the group consisting of carbon dioxide, nitrogen, argon, oxygen, methane, ethane, propane, butane, n-pentane, nitrous oxide, sulfur hexafluoride, a chlorofluorocarbon, a fluorocarbon, an ether comprising two alkyl radicals which may be the same or different and which contain no more than 3 carbon atoms, carbon monoxide, helium, hydrogen, xenon, ethanol, water and mixtures thereof. Particularly preferred is an antisolvent selected from the group consisting of carbon dioxide, nitrogen, nitrous oxide, ethane and mixtures thereof. Most preferably the antisolvent is carbon dioxide.

The solvent employed in the present process is preferably selected from the group consisting of water, methanol, ethanol, dimethyl sulfoxide, dichloromethane, acetone, acetonitril, acetic acid, carbon dioxide, dimethyl ether, diethyl ether and mixtures thereof. Particularly preferred are water, methanol, ethanol, dimethyl sulfoxide, dichloromethane, acetone and mixtures thereof.

In a particularly preferred embodiment of the invention, the antisolvent is a supercritical or nearcritical fluid. The use of such an antisolvent offers the important advantage that essentially solvent-free particles are obtained from the process. In order to ensure that the antisolvent is in a suitable supercritical or nearcritical state, it is preferred that during step a. conditions are maintained at 0.7xT_{c} to 1.4xT_{c} and 0.2xP_{c} to 7xP_{c} of the antisolvent, more preferably at T_{c} to 1.2xT_{c} and 0.9xP_{c} to 3xP_{c}. Here T_{c} and P_{c} refer to the critical temperature and critical pressure respectively.

A very advantageous aspect of the present process resides in the possibility to produce particles of a very uniform particle size. In a particularly preferred embodiment, the particles obtained from step c. have a particle size distribution with a standard deviation of less than 50% of the volume weighted average particle size, more preferably of less than 30%, most preferably of less than 20% of the volume weighted average particle size.

The particle size and its distribution can be controlled by changing the inlet flows and/or the additional anti-solvent flow in the growing zone. Another method of influencing the average particle size and its distribution is the change of volumes of the different zones. Either of these methods enables averages particle sizes, which varies between 0.1 µm and 80 µm.

Another advantage of the invention relates to the possibility to obtain a high yield of particles. Usually in the present process at least 10 wt.% of the solute present in the stream of the fluid solution of step a. is recovered in the particles obtained in step d. More preferably at least 50 wt.% of the solute is recovered and most preferably at least 90 wt.% is recovered.

The process of the invention may suitably be used to produce particles for various enduses. Preferably, the solute comprises a pharmaceutically active substance, a herbicide, a pesticide, a catalytically active substance and/or a metal coating precursor. In the case the solute comprises a pharmaceutically active substance it is preferred to additionally include therein a carrier material and to use an antisolvent in which both the pharmaceutically active substance and the carrier material are substantially insoluble. Examples of the active compounds that may advantageously be employed include materials of the groups consisting of steroids, proteins, peptides, DNA, and plasmids and mixtures thereof. Examples of carrier materials that may advantageously be employed include materials selected from the group consisting of polysaccharides, oligosaccharides, lactose, polylactic acid, polyglycolic acid, poly(D,L-lactideglycolide) copolymer, proteins, oligopeptides, lipids and mixtures thereof.

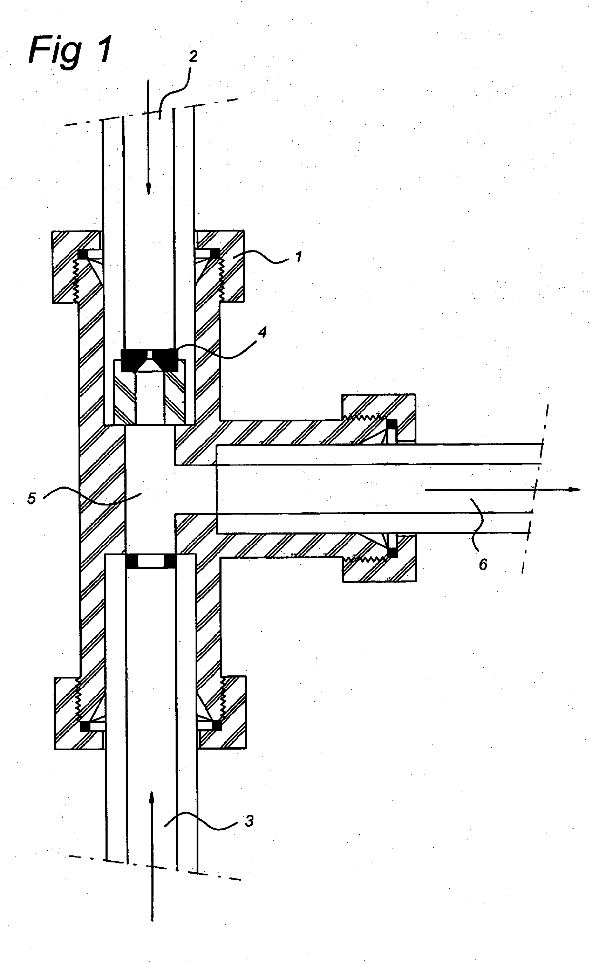

Figure 1 shows a schematic representation of a part of the apparatus [1] that may suitably be used to carry out the process according to the present invention. The apparatus [1] comprises an inlet [2] for a fluid solution comprising a solvent and a solute to be precipitated and an inlet [3] for a non-gaseous antisolvent. The fluid solution from inlet [2] is passed through the nozzle [4] into the mixing chamber [5] in which it is combined with the antisolvent that is fed therein from the inlet [3]. From the mixing chamber the mixture of fluid solution and antisolvent is fed into the tube [6] in which nucleation will commence.

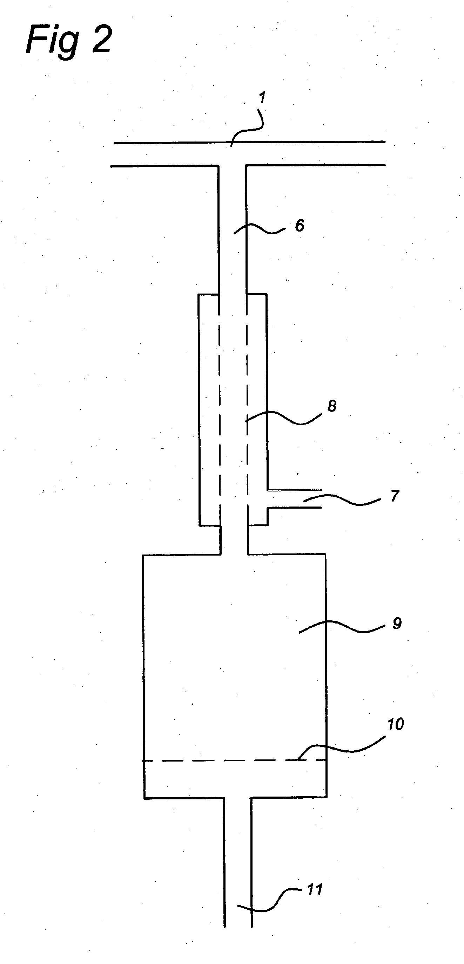

Figure 2 shows a representation of a complete apparatus that can be used to carry out the present process. The part [1] of the apparatus in figure 2 is a more schematic representation of the part [1] that has been depicted in more detail in figure 1. The tube [6] shown in figure [2] represents the nucleation and growth zone in which the nucleation and subsequent growth to micro- or nanoparticles occurs. Additional antisolvent is admixed to the mixture of fluid solution and antisolvent that is passing through the tube [6] via the inlet [7] and the perforations [8] in the wall of the tube [6]. The particles containing mixture is fed from the tube [6] into the particle collection vessel [9]. Said particle collection vessel [9] is provided with a filter plate [10] with a pore size of e.g. 1 µm, through which the mixture of fluid solution and antisolvent can pass to subsequently exit the apparatus through outlet [11], whilst retaining the formed particles.

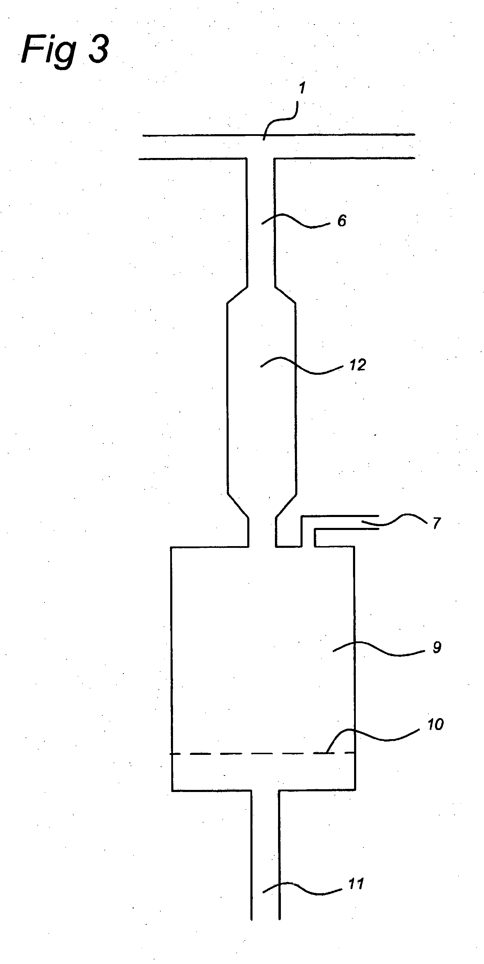

Figure 3 shows a representation of an alternative embodiment of an apparatus for carrying out the present invention. The part [1] again corresponds with the part [1] that has been depicted in detail in figure 1. The tube [6] represents the nucleation zone in which nucleation occurs, whereas the tube [12] represents the growth zone in which the nucleated particles are allowed to grow. The particles containing mixture is fed from tube [12] into the particle collection vessel [9]. Additional antisolvent is admixed to the particles containing mixture through inlet [7] so as to stimulate further particle growth. The resulting particles are recovered by means of the filter plate [10] and the particle-free mixture of fluid solution and antisolvent exits the apparatus through outlet [11].

The invention is further illustrated by the following examples.

### EXAMPLES

### Example 1

A mixing chamber was constructed from a T-piece with ¼" tubing connections. The two opposing connections are used as CO₂ and solution inlets. The solution inlet is fitted with a 0,1 mm sapphire nozzle in the tip. The mixing chamber is depicted in figure 1.

The mixture of solution and CO₂ exits the mixing chamber through the third connection into a 4 mm inside diameter tube with a 150 mm length. This is the nucleation zone. The nucleation zone is connected to the growth zone. The growth zone consists of a 4 mm inside diameter tube with 900 mm length. In this growth zone additional CO₂ is admixed through perforations in the tube wall. Attached to the growth zone is a 1 litre particle collection vessel fitted with an internal metal fibre filter of 1 micrometer pore size at the bottom. The solution and the CO₂ are supplied to the T-piece by high pressure syringe pumps. The CO₂ is supplied to the growth zone using a pulse-less CO₂ delivery system. During the process the whole system is maintained at 40 °C. The pressure in the entire system is maintained at 120 bar applying an electronic backpressure control system. The system is shown in figure 2.

A dichloromethane solution of 1% w/v 1-polylactic acid (L-PLA) with a molecular weight of 215.000 Dalton was forced through the nozzle into the T-piece with a flow rate of 5 ml/min. The CO₂ flow rate was set at 15 ml/min. This lead to a mixing energy of 4.7 W. The residence time in the T-piece was 1s, the residence time in the nucleation/growth zone was 5s, the admixing was done gradually with a total of 110 g/min during 7 s. A total of 30 ml solution was used, containing 0.3 gram of L-PLA.

After flushing with 10 kg of pure CO₂ 0.21 gram of dry powder was obtained. The powder consisted of unagglomerated particles, which were characterised using a scanning electron microscopy. The volume weighted particle average particle size was found to be 3.0 µm with a standard deviation of 0.9 µm. Thus, in this example, a yield of 70% and a standard deviation of 30% of the volume weighted average particle size were achieved.

### Example 2

Another mixing chamber was constructed from a T-piece with ¼" tubing connections. The two opposing connections are used as CO₂ and solution inlets. The solution inlet is fitted with a 0,1 mm sapphire nozzle in the tip.

The mixture of solution and CO₂ exits the mixing chamber through the third connection into a 4 mm inside diameter tube with a 50 mm length. This is the nucleation zone. The nucleation zone is connected to the growth zone. The growth zone consists of a 10 mm inside diameter tube with 500 mm length. Attached to the growth zone is a 1 litre particle collection vessel fitted with an internal metal fiber filter of 1 micrometer pore size at the bottom. Close to the mixture inlet of the collection chamber a second CO₂ flow is admixed in the vessel. The solution and the CO₂ are supplied to the T-piece by high pressure syringe pumps. The CO₂ is supplied to the collection chamber using a pulse-less CO₂ delivery system. During the process the whole system is maintained at 40 °C. The pressure in the entire system is maintained at 120 bar applying an electronic backpressure control system. The system is shown in figure 3.

A DMSO solution of 0,87% w/v dextran (MW 20000) was forced through the nozzle into the T-piece and mixed with a CO₂ flow. Different flow rates resulting in different mole fractions CO₂ are set. Three experiments were performed. The process parameters and the results are given in table 1.

**Table 1:**

| | Mole fraction CO₂ in mixing zone | Solution flow rate (ml/min) in mixing zone | CO₂ first flow rate (ml/min) in mixing zone | Mixing energy (mW) | Residence time in mixing zone(s) | Residence time in nucleation zone(s) | CO₂ second flow rate g/min) in particle collection vessel | Residence time in growth zone(s) | Particle size (µm) | S.D. (µm) | Yield |
|---|---|---|---|---|---|---|---|---|---|---|---|
| 2a | 0.29 | 7.2 | 2.9 | 16.2 | 1 | 2 | 220 | 75 | 4.5 | 1.1 | 75 % |
| 2b | 0.41 | 6 | 3.9 | 9.7 | 1 | 2 | 220 | 75 | 3.5 | 0.8 | 79 % |
| 2c | 0.79 | 6 | 21.5 | 9.7 | 0.4 | 0.8 | 220 | 27 | 0.50 | 0.09 | 60 % |

The table shows that the particle size can be varied strongly by adjusting process parameters such as CO₂ flow and residence time in the different zones.

### Example 3

In the apparatus of example 2 an experiment was performed to encapsulate cholesterol in a 1-PLA matrix. A solution of 1,0% w/v 1-PLA (Mw 216000) and 0,1% cholesterol in dichloromethane was forced through the nozzle into the T-piece and mixed with a CO₂ flow. The process parameters and the results are given in table 2. Analyses showed that the obtained particles contained 1.2% cholesterol. Thus, it can be concluded that the cholesterol is successfully encapsulated in the 1-PLA microparticles.

**Table 2**

| | Mole fraction CO₂ in mixing zone | Solution flow rate (ml/min) (mixing zone) | CO2 first flow rate (ml/min) (mixing zone) | Mixing energy (mW) | Residence time in mixing zone(s) | Residence time in nucleation zone(s) | CO2 second flow rate (g/min) (particle collection vessel) | Residence time in growth zone(s) | Particle size (µm) | S.D. (µm) | Yield |
|---|---|---|---|---|---|---|---|---|---|---|---|
| 3 | 0.74 | 2.0 | 6.0 | 0.35 | 1.2 | 2.4 | 110 | 292 | 2.4 | 0.5 | 59% |

### Example 4

In the apparatus of example 2 an experiment is performed to encapsulate bovine serum albumin (BSA) in a dextran matrix.

A DMSO solution of 0.87% w/v dextran (Mw 20000) and 0.02% BSA was forced through the nozzle into the T-piece and mixed with a CO₂ flow. The process parameters and the results are given in table 3. Analysis showed that the particles contained 2.1 % of BSA. Thus, it can be concluded that a significant fraction, if not all of the BSA had been successfully encapsulated in the dextran microparticles.

**Table 3:**

| | Mole fraction CO₂ in mixing zone | Solution flow rate (ml/min) (mixing zone) | CO₂ first flow rate (ml/min) (mixing zone) | Mixing energy (mW) | Residence time in mixing zone(s) | Residence time in nucleation zone(s) | CO₂ second flow rate (g/min) (particle collection vessel) | Residence time in growth zone(s) | Particle size (µm) | S.D. (µm) | Yield |
|---|---|---|---|---|---|---|---|---|---|---|---|
| 4 | 0.41 | 6 | 3.9 | 9.7 | 1 | 2 | 220 | 75 | 3.5 | 0.8 | 74 % |

## Claims

1. A process for the preparation of small particles through precipitation, which process employs a fluid solution comprising a solvent and solute to be precipitated and a supercritical or nearcritical antisolvent, said solvent being soluble in or miscible with the antisolvent and said solute being substantially insoluble in the antisolvent, wherein the process comprises the successive steps of:
a. feeding a stream of the fluid solution and a stream of the antisolvent into a mixing zone where both streams are thoroughly mixed to achieve a condition of super saturation whilst ensuring that hardly any nucleation occurs during the mixing;
b. feeding the resulting mixture of the fluid solution and the antisolvent into a nucleation zone allowing nucleation to commence;
c. allowing the nuclei formed in the nucleation zone to grow to particles with a volume weighted average diameter of no more than 50 µm, preferably of no more than 7 µm.
d. collecting the particles;
e. separating them from the supercritical or nearcritical antisolvent by depressuring; and wherein during or following step b., and prior to step d. additional antisolvent is admixed to the mixture of the fluid solution and the antisolvent.

2. A process for the preparation of small particles through precipitation, which process employs a fluid solution comprising a solvent and solute to be precipitated and a non-gaseous antisolvent, said solvent being soluble in or miscible with the antisolvent and said solute being substantially insoluble in the antisolvent, wherein the process comprises the successive steps of:
a. feeding a stream of the fluid solution and a stream of the antisolvent into a mixing zone where both streams are thoroughly mixed to achieve a condition of super saturation whilst ensuring that hardly any nucleation occurs during the mixing:
b. feeding the resulting mixture of the fluid solution and the antisolvent into a nucleation zone allowing nucleation to commence:
c. allowing the nuclei formed in the nucleation zone to grow to particles with a volume weighted average diameter of no more than 50 µm, preferably of no more than 7 µm.
d. collecting the particles;
e. separating them from the antisolvent by depressuring:
and wherein during or following step b., and prior to step d. additional antisolvent is admixed to the mixture of the fluid solution and the antisolvent, and wherein the residence time within the nucleation and growth zone is at least 3 seconds.

3. The process according to claim 1 or 2, wherein the additional antisolvent is admixed after the precipitated particles have grown to a volume weighted average diameter of at least 0.1 µm, preferably of at least of at least 0.4 µm

4. The process according to any one of claims 1-3, wherein the antisolvent is admixed at least 1 second after completion of step a., preferably at least 3 seconds after completion of step a.

5. The process according to any one of claims 1-4, wherein the ratio of the solution flow rate to antisolvent flow rate in step a. is between 5:1 1 and 1:10.

6. The process according to any one of claims 1-5, wherein the collected particles, when reaching the end of the nucleation zone or immediately prior to the admixture of additional antisolvent, contain at least 1 wt.% solvent, preferably at least 10 wt.% solvent.

7. The process according to any one of claim 2-6, wherein the additional antisolvent is admixed in an amount effective to reduce the solvent content of the collected particles to less than 1 wt.%, preferably to less than 0.01 wt.%.

8. The process according to any one of claims 1-7, wherein less than 25%, preferably less than 10% of the nuclei formed in the process are formed in the mixing zone.

9. The process according to any one of claims 1-8, wherein the residence time within the mixing zone is less than 15 seconds, preferably less than 1 second.

10. The process according to any one of claims 1-9, wherein the mixing energy applied in the mixing zone exceeds 1 J/kg and preferable more than 10J/kg.

11. The process according to any one of claims 1-10, wherein the residence time within the nucleation and growth zone is at least 20 seconds, preferably at least 60 seconds.

12. The process according to any one of claims 1-11, wherein the solution comprises between 0.0001 and 30 wt.%, preferably between 0.1 and 5 wt.% of the solute.

13. The process according to any one of claims 2-12, wherein the antisolvent is a supercritical or nearcritical fluid.

14. The process according to any one of claims 1-13, wherein the particles obtained from step c. have a particle size distribution with a standard deviation of less than 50% of the volume weighted average particle size, preferably of less than 20% of the volume weighted average particle size.

15. The process according to any one of claims 1-14, wherein at least 10 wt.%, preferably at least 50 wt.% of the solute present in the stream of the fluid solution of step a. is recovered in the particles obtained in step d.

## Patentansprüche

1. Verfahren zur Herstellung von kleinen Partikeln durch Ausfällung, wobei das Verfahren eine flüssige Lösung verwendet, welche Lösungsmittel und eine gelöste Substanz, welche ausgefällt werden soll, und ein überkritisches oder nahkritische Antilösungsmittel umfasst, wobei das Lösungsmittel löslich in oder mischbar mit dem Antilösungsmittel ist und wobei die gelöste Substanz im Wesentlichen unlöslich in dem Antilösungsmittel ist, wobei das Verfahren die aufeinanderfolgenden Schritte umfasst von:
a. einem Zuführen eines Stromes der flüssigen Lösung und eines Stromes des Antilösungsmittels in einen Mischbereich, wo beide Ströme gründlich gemischt werden, um einen Übersättigungszustand zu erreichen, während gewährleistet wird, dass kaum eine Keimbildung während des Mischens auftritt;
b. einem Zuführen der resultierenden Mischung der flüssigen Lösung und des Antilösungsmittels in einen Keimbildungsbereich, wodurch ein Beginn einer Keimbildung ermöglicht wird;
c. einem Ermöglichen der Keime, welche in dem Keimbildungsbereich geformt wurden, zu Partikeln mit einem volumengewichteten mittleren Durchmesser von nicht mehr als 50 µm, vorzugsweise nicht mehr als 7 µm, zu wachsen;
d. einem Sammeln der Partikel;
e. einem Trennen dieser von dem überkritischen oder nahkritischen Antilösungsmittel durch Druckentspannung; und wobei während oder nachfolgend Schritt b., und vorausgehend Schritt d. zusätzliches Antilösungsmittel zu der Mischung der flüssigen Lösung und des Antilösungsmittels beigemischt wird.

2. Verfahren zur Herstellung von kleinen Partikeln durch Ausfällung, wobei das Verfahren eine flüssige Lösung verwendet, welche ein Lösungsmittel und eine gelöste Substanz, welche ausgefällt werden soll, und ein nicht gasförmiges Antilösungsmittel umfasst, wobei das Lösungsmittel löslich in oder mischbar mit dem Antilösungsmittel ist und wobei die gelöste Substanz im Wesentlichen unlöslich in dem Antilösungsmittel ist, wobei das Verfahren die aufeinanderfolgenden Schritte umfasst von:
a. einem Zuführen eines Stromes der flüssigen Lösung und eines Stromes des Antilösungsmittels in einen Mischbereich, wo beide Ströme gründlich gemischt werden, um einen Übersättigungszustand zu erreichen, während gewährleistet wird, dass kaum eine Keimbildung während des Mischens auftritt;
b. einem Zuführen der resultierenden Mischung der flüssigen Lösung und des Antilösungsmittels in einen Keimbildungsbereich, wodurch ein Beginn einer Keimbildung ermöglicht wird;
c. einem Ermöglichen der Keime, welche in dem Keimbildungsbereich geformt wurden, zu Partikeln mit einem volumengewichteten mittleren Durchmesser von nicht mehr als 50 µm, vorzugsweise nicht mehr als 7 µm, zu wachsen;
d. einem Sammeln der Partikel;
e. einem Trennen dieser von dem Antilösungsmittel durch Druckentspannung; und wobei während oder nachfolgend Schritt b., und vorausgehend Schritt d. zusätzliches Antilösungsmittel zu der Mischung der flüssigen Lösung und des Antilösungsmittels beigemischt wird, und wobei die Verweildauer in dem Keimbildungs- und Wachstumsbereich zumindest 3 Sekunden beträgt.

3. Verfahren nach einem der Ansprüche 1 oder 2, wobei das zusätzliche Antilösungsmittel beigemischt wird, nachdem die ausgefällten Partikel zu einem volumengewichteten mittleren Durchmesser von zumindest 0,1 µm, vorzugsweise von zumindest von zumindest 0,4 µm, gewachsen sind.

4. Verfahren nach einem der Ansprüche 1 bis 3, wobei das Antilösungsmittel zumindest 1 Sekunde nach Abschluss von Schritt a., vorzugsweise zumindest 3 Sekunden nach Abschluss von Schritt a., beigemischt wird.

5. Verfahren nach einem der Ansprüche 1 bis 4, wobei das Verhältnis der Lösungsmittelflussrate zur Antilösungsmittelflussrate in Schritt a. zwischen 5:1 und 1:10 liegt.

6. Verfahren nach einem der Ansprüche 1 bis 5, wobei die gesammelten Partikel, beim Erreichen des Endes der Keimbildungszone oder unmittelbar vor der Beimischung von zusätzlichem Antilösungsmittel, zumindest 1 Gew.-% Lösungsmittel, vorzugsweise zumindest 10 Gew.-% Lösungsmittel, umfassen.

7. Verfahren nach einem der Ansprüche 2 bis 6, wobei das zusätzliche Antilösungsmittel in einer Menge beigemischt wird, welche wirksam ist, dass der Anteil Lösungsmittel der gesammelten Partikel zu weniger als 1 Gew.-%, vorzugsweise zu weniger als 0,01 Gew.-%, reduziert wird.

8. Verfahren nach einem der Ansprüche 1 bis 7, wobei weniger als 25%, vorzugsweise weniger als 10% der Keime, welche in dem Verfahren gebildet werden, in dem Mischbereich gebildet werden.

9. Verfahren nach einem der Ansprüche 1 bis 8, wobei die Verweildauer in dem Mischbereich weniger als 15 Sekunden, vorzugsweise weniger als 1 Sekunde, beträgt.

10. Verfahren nach einem der Ansprüche 1 bis 9, wobei die Mischenergie, welche in dem Mischbereich angewendet wird, 1 J/kg und vorzugsweise mehr als 10 J/kg übersteigt.

11. Verfahren nach einem der Ansprüche 1 bis 10, wobei die Verweildauer in dem Keimbildungs- und Wachstumsbereich zumindest 20 Sekunden, vorzugsweise zumindest 60 Sekunden, beträgt.

12. Verfahren nach einem der Ansprüche 1 bis 11, wobei die Lösung zwischen 0,0001 und 30 Gew.-%, vorzugsweise zwischen 0,1 und 5 Gew.-% der gelösten Substanz, umfasst.

13. Verfahren nach einem der Ansprüche 2 bis 12, wobei das Antilösungsmittel eine überkritische oder nahkritische Flüssigkeit ist.

14. Verfahren nach einem der Ansprüche 1 bis 13, wobei die von Schritt c. erhaltenen Partikel eine Partikelgrößenverteilung mit einer Standardabweichung von weniger als 50% der volumengewichteten mittleren Partikelgröße, vorzugsweise von weniger als 20% der volumengewichteten mittleren Partikelgröße, aufweisen.

15. Verfahren nach einem der Ansprüche 1 bis 14, wobei zumindest 10 Gew.-%, vorzugsweise zumindest 50 Gew.-% der gelösten Substanz, welche in dem Strom der flüssigen Lösung von Schritt a. vorhanden ist, in den in Schritt d. erhaltenen Partikeln enthalten ist.

## Revendications

1. Procédé de préparation de petites particules par précipitation, lequel procédé utilise une solution fluide comprenant un solvant et un soluté à précipiter et un antisolvant supercritique ou quasi-critique, ledit solvant étant soluble dans l'antisolvant ou miscible avec celui-ci et ledit soluté étant essentiellement insoluble dans l'antisolvant, le procédé comprenant les étapes successives qui consistent :
a. à alimenter un courant de solution fluide et un courant d'antisolvant dans une zone de mélange dans laquelle les deux courants sont fortement mélangés afin de réaliser une condition de supersaturation tout en s'assurant que pratiquement aucune nucléation ne se produit pendant le mélange ;
b. à alimenter le mélange résultant de la solution fluide et de l'antisolvant dans une zone de nucléation permettant à la nucléation de commencer ;
c. à permettre la croissance des noyaux formés dans la zone de nucléation afin de former des particules avec un diamètre moyen pondéré en volume ne dépassant pas 50 µm, de préférence ne dépassant pas 7 µm.
d. à collecter les particules ;
e. à les séparer de l'antisolvant supercritique ou quasi-critique par dépressurisation ;
et selon lequel, pendant ou après l'étape b., et avant l'étape d. un antisolvant supplémentaire est ajouté au mélange de la solution fluide et de l'antisolvant.

2. Procédé de préparation de petites particules par précipitation, lequel procédé utilise une solution fluide comprenant un solvant et un soluté à précipiter et un antisolvant non gazeux, ledit solvant étant soluble dans l'antisolvant ou miscible avec celui-ci et ledit soluté étant essentiellement insoluble dans l'antisolvant, le procédé comprenant les étapes successives qui consistent :
a. à alimenter un courant de solution fluide et un courant d'antisolvant dans une zone de mélange dans laquelle les deux courants sont fortement mélangés afin de réaliser une condition de supersaturation tout en s'assurant que pratiquement aucune nucléation ne se produit pendant le mélange ;
b. à alimenter le mélange résultant de la solution fluide et de l'antisolvant dans une zone de nucléation permettant à la nucléation de commencer ;
c. à permettre la croissance des noyaux formés dans la zone de nucléation afin de former des particules avec un diamètre moyen pondéré en volume ne dépassant pas 50 µm, de préférence ne dépassant pas 7 µm.
d. à collecter les particules ;
e. à les séparer de l'antisolvant par dépressurisation ;
et selon lequel, pendant ou après l'étape b., et avant l'étape d. un antisolvant supplémentaire est ajouté au mélange de la solution fluide et de l'antisolvant, et où le temps de séjour dans la zone de nucléation et la zone de croissance est d'au moins 3 secondes.

3. Procédé selon la revendication 1 ou 2, dans lequel l'antisolvant supplémentaire est ajouté après la croissance des particules précipitées jusqu'à un diamètre moyen pondéré en volume d'au moins 0,1 µm, de préférence d'au moins 0,4 µm.

4. Procédé selon l'une quelconque des revendications 1 à 3, dans lequel l'antisolvant est ajouté au moins 1 seconde après l'achèvement de l'étape a., de préférence au moins 3 secondes après l'achèvement de l'étape a.

5. Procédé selon l'une quelconque des revendications 1 à 4, dans lequel le rapport du débit de la solution sur le débit de l'antisolvant dans l'étape a. est entre 5:1 et 1:10.

6. Procédé selon l'une quelconque des revendications 1 à 5, dans lequel les particules collectées, lorsqu'elles atteignent la fin de la zone de nucléation ou immédiatement avant l'ajout de l'antisolvant supplémentaire, contiennent au moins 1% en poids de solvant, de préférence au moins 10% en poids de solvant.

7. Procédé selon l'une quelconque des revendications 2 à 6, dans lequel l'antisolvant supplémentaire est ajouté en une quantité efficace pour réduire la teneur en solvant des particules collectées à moins de 1% en poids, de préférence à moins de 0,01 % en poids.

8. Procédé selon l'une quelconque des revendications 1 à 7, dans lequel moins de 25%, de préférence moins de 10% des noyaux formés dans le processus sont formés dans la zone de mélange.

9. Procédé selon l'une quelconque des revendications 1 à 8, dans lequel le temps de séjour dans la zone de mélange est inférieur à 15 secondes, de préférence inférieur à 1 seconde.

10. Procédé selon l'une quelconque des revendications 1 à 9, dans lequel l'énergie de mélange appliquée dans la zone de mélange est supérieure à 1 J/kg et de préférence supérieure à 10 J/kg.

11. Procédé selon l'une quelconque des revendications 1 à 10, dans lequel le temps de séjour dans la zone de nucléation et la zone de croissance est d'au moins 20 secondes, de préférence d'au moins 60 secondes.

12. Procédé selon l'une quelconque des revendications 1 à 11, dans lequel la solution comprend entre 0,0001 et 30% en poids, de préférence entre 0,1 et 5% en poids du soluté.

13. Procédé selon l'une quelconque des revendications 2 à 12, dans lequel l'antisolvant est un fluide supercritique ou quasi-critique.

14. Procédé selon l'une quelconque des revendications 1 à 13, dans lequel les particules obtenues de l'étape c. présentent une distribution granulométrique avec un écart-type de moins de 50% de la taille moyenne des particules pondérée en volume, de préférence de moins de 20% de la taille moyenne des particules pondérée en volume.

15. Procédé selon l'une quelconque des revendications 1 à 14, dans lequel au moins 10% en poids, de préférence au moins 50% en poids du soluté présent dans le courant de solution fluide de l'étape a. sont récupérés dans les particules obtenues dans l'étape d.
